# EUROPEAN PATENT SPECIFICATION

(11) **EP 3 349 201 B1**
(45) Date of publication and mention of the grant of the patent: **06.03.2019**
(21) Application number: 17151135.5
(22) Date of filing: 12.01.2017
(51) Int. Cl.: G08G 1/14, G06K 9/00

(54) **PARKING ASSIST METHOD AND VEHICLE PARKING ASSIST SYSTEM**
EINPARKASSISTENZVERFAHREN UND FAHRZEUGEINPARKASSISTENZSYSTEM
PROCÉDÉ D'AIDE AU STATIONNEMENT ET SYSTÈME D'ASSISTANCE AU STATIONNEMENT DE VÉHICULE

(43) Date of publication of application: 18.07.2018
(73) Proprietor: Alpine Electronics, Inc., Tokyo (JP)
(72) Inventor: Barota, Ovidiu Petru, 70567 Stuttgart (DE)
(74) Representative: Schmitt-Nilson Schraud Waibel Wohlfrom Patentanwälte Partnerschaft mbB

(56) References cited:
- US-A1- 2015 371 541

## Description

The present disclosure relates to a parking assist method for a vehicle which receives at least one image of an environment captured with a vehicle camera, and to a vehicle parking assist system.

Vehicles may be provided with a parking assist system which may be configured to identify obstacles and register the distance between the obstacles and the vehicle as well as identifying a parking spot. The parking assist system may assist a driver in moving the vehicle towards the identified parking spot, e.g. by providing a depiction of the environment and an identified parking spot in a display of a vehicle head unit.

A variety of different parking assist systems is known in the art. For example, a current available parking lot detection system is off board (i.e. not installed on the vehicle), is optical based and uses so-called Closed Circuit Television (CCTV) with use of video cameras employed for surveillance in areas such as parking sites of airports or supermarket places. Other off board systems are parking lot sensor based or user app (by sight) based (e.g., using a smartphone camera with an appropriate app thereon). Off board systems require connection to infrastructure server in order to find a candidate parking place. So-called on board systems installed on the vehicle employ, for example, rear, front and side cameras (surround view), or are PDC (Park Distance Control) sensor based.

There is further known an on board parking assist system which uses fisheye cameras with which it is possible to get a 360° view with 4 cameras. They are usually installed in the side mirrors, just above the front bumper and close to rear door number plate. Therefore it is possible to create a clear image of an object around the car (e.g., 1m range). These systems lose the ability to cover a range of about 20m and detect parking lot opportunities due to their low height mounting position.

Typically, optical vision based parking lot detection algorithms assure reliable detection of free parking space. For car drivers the parking lot finding activity may be in most of the cases a stressing effort due to queuing cars behind. There is usually no time to connect to infrastructure of the parking place or use a booked parking lot because of unknown arrival time. A more stressless way is parking in parking houses with well equipped guidance infrastructure (e.g display of direction of free parking lot and number of free parking lots) or with automatic or human valet parking. Such parking houses are however rare and expensive. Parking under open sky and without digital infrastructure is the daily exercise.

DE 11 2013 004 443 T5 discloses a parking assistance device with a capability to discover adjacent free parking places as the car passes by, to maneuver the car into the parking place in forward or backwards driving, and to use front and back directed sensors / cameras. In particular, it acquires an X-direction position and Y-direction position of a target present on the near side of the parking space in the X-direction, the direction of travel of the host vehicle defined as the X-direction and the direction perpendicular to the X-direction as the Y-direction. On the basis of the acquired position of the target, the X-direction position and the Y-direction position of the parking space are estimated. On the basis of the estimated parking space position, a forward movement approach is set.

US 2015/371541 A1 is directed to a method and system for locating vacant parking places, wherein in response to a user's request for a vacant parking place, the system generates a route map and/or a heat map of the route with the highest probability of locating a vacant parking place, To this end, the system employs a so called automatic-vacant-parking-place locator (AVPPL) which may comprise an AVPPL application server, a data base and a plurality of AVPPL community members. An AVPPL community member may be required to place his/her computer communication device, such as a smartphone, cameras of the infotainment systems and other on-board vehicle computers, and dedicated video cameras or other recording devices for use with vehicles, in a place and manner such that the camera(s) may face, at least partially, one of the street sides where a car may park. While driving, the camera of the computer communication device may capture, as video and/or as picture stills, the streets' long side. An AVPPL processing unit, which may be inside the smartphone and/or in a server, may process the images to detect automatically vacant parking places. Exemplary computer communication devices may include infotainment systems and onboard computers in the motor vehicles themselves, which may be additionally linked to cameras and sensors mounted in the vehicle, including front cameras, rear cameras, side cameras, and roof cameras, and dedicated video cameras or recording units including an externally or internally mounted camera with a 360 degree range.

An object of the present invention is therefore to provide a vehicle parking assist system and a parking assist method for a vehicle based on one or more images of an environment captured with a vehicle camera which can provide the driver with improved performance in assisting the driver to find a free parking place.

The invention relates to a parking assist method for a vehicle and to a vehicle parking assist system according to the independent claims. Embodiments thereof are disclosed in the dependent claims.

According to an aspect, there is provided a parking assist method for a vehicle comprising the steps of receiving at least one image of an environment captured with an omnidirectional vehicle camera mounted at a roof of the vehicle and with an approximately 360-degree field of view at least in the horizontal plane, providing data of the at least one image to a calculating unit which is configured to determine from the received data at least one parameter set indicative of at least one property of a candidate parking space for the vehicle within a range of the environment which covers a dimension of a plurality of vehicles located in the environment, determining at least one candidate parking space from the parameter set, and providing a data representation of at least part of the environment with a representation of the determined at least one candidate parking space through a graphical user interface. In particular, the data representation is a data map of at least part of the environment, such as a parking space or parking lot map.

According to an embodiment, the data representation is provided through the graphical user interface in a plan view, such as a plan parking lot map view.

According to another aspect, there is provided a vehicle parking assist system comprising an omnidirectional vehicle camera with an approximately 360-degree field of view at least in the horizontal plane mounted at a roof of the vehicle, wherein the omnidirectional vehicle camera is configured and arranged to capture at least one image of an environment proximate to the vehicle, a calculating unit operatively coupled with the omnidirectional vehicle camera for receiving data of the at least one image, wherein the calculating unit is configured to determine at least one parameter set indicative of at least one property of a candidate parking space for the vehicle from the data of the at least one image within a range of the environment which covers a dimension of a plurality of vehicles located in the environment, a processing unit operatively coupled with the calculating unit and configured to determine at least one candidate parking space from the parameter set, wherein the processing unit is configured to provide a data representation of at least part of the environment with a representation of the determined at least one candidate parking space to a graphical user interface for a driver's assistance.

The use of an omnidirectional vehicle camera with an approximately 360-degree field of view at least in the horizontal plane mounted at a roof of the vehicle provides the following advantages compared to known technologies: The use of such camera is more cost effective than the use of, e.g. a 4-camera system providing a surround view. The calculating unit and the processing unit, which may be comprised in an electronic control unit (so-called ECU) of the vehicle for controlling driving functions thereof, have to process only one camera image. Due to its position and capability of providing an approximately 360-degree field of view, the camera and parking assist system can provide an improved view on the surrounding environment than driver's eyes or a surround-view system with front, rear and side cameras mounted at the height of side mirrors or bumper bars of the vehicle. The parking assist method and system can present candidates for any parking lots to the driver in real time and in a parking lot map surrounding the vehicle, wherein it does not require any connection to infrastructure in order to find a parking lot .

The system and method may also work also in parking areas without an infrastructure based free parking lot detection mechanism.

According to another aspect, there is provided a computer program product comprising software code sections which are configured to perform a method according to the invention as described herein. In particular, such computer program may be implemented in principle in any processing device on the vehicle which is appropriate to perform the respective function. Such processing device may be, for example, implemented in, or part of, a processor of an ECU of the vehicle, or may be a separate component (e.g. coupled to the Ethernet-Bus of the vehicle), or may be a distributed system using one or more processors and/or integrated circuits. The computer program may be stored on a computer readable medium.

For example, each one of the calculating unit and the processing unit may be implemented in hardware and/or in software. Each one or both may be, for example, implemented in, or part of, an ECU of the vehicle, or may be a separate component (in hardware and/or software), or may be a distributed system (in hardware and/or software) using one or more processors and/or integrated circuits.

According to an embodiment, the calculating unit comprises an integrated circuit, such as a Field Programmable Gate Array (FPGA) or Neural Processing Unit (Vision Digital Signal Processor), which is programmed according to a set of parameters provided from a trained neural network. Such FPGA integrated circuit may be provided with the raw pixel data from the one or more vehicle camera images and may provide a parameter set which may be processed by a processor of an ECU of the vehicle. In this way, a fast and parallel processing of image data through a logic circuit may be realized, so that after inference the parameter set and the determination of the at least one candidate parking space from the parameter set may be performed in real time.

According to another embodiment, the calculating unit includes a processing device coupled with a storing device which is programmed according to a set of parameters (neural layer feature maps) provided from a trained neural network. With means of the storing device and the set of parameters (feature maps) stored thereon, the processing device can perform a fast processing of image data. The stored parameters of the trained neural network are used in a forward propagation calculation (inference). In particular, input values are individual frames of the roof camera image stream. Output values may be a type, position (in the frame) and probability of the detected features, e.g., at least one candidate parking space.

According to an embodiment, the method further comprises attributing the determined at least one candidate parking space a probability for applicability as a parking space in the data representation. For example, the probability may indicate "Obstructed", "Free", or "Unclear". For instance, such probability may be accompanied with a probability percentage of having identified a suitable or no parking space, e.g. ">90%" for "Obstructed" and/or "Free", or "50%" for "Unclear".

According to a further embodiment, the method further comprises adapting the probability for applicability as a parking space based on a time period elapsed from a determined point of time. For example, the status of the probability may be changed based on the elapsed time from the parking space detection, e.g. from "Free" to "Unclear" after a certain time period has elapsed. In this time period, it may be that another car has meanwhile used the free parking space as a parking lot.

According to a further embodiment, the probability may be determined from a graded probability set which is indicative of at least two of: an obstructed parking space, an occupied parking space, a free parking space, and an unclear applicability depending on the features the neural network was trained for.

According to an embodiment, the method further comprises determining at least one candidate parking space within a predetermined first radius around the vehicle, and/or providing the data representation of at least part of the environment within a predetermined second radius. The first radius and second radius may have the same or different values. For example, one or both of the first and second radius may be variably settable by the driver, or may be set automatically, e.g. depending on the vehicle speed. In a variant, the probability for applicability of a candidate parking space as an actual parking space may be decreased with increased detection distance, i.e. the extension of the radius, since detecting uncertainty may increase with increasing distance.

According to an embodiment, the method comprises receiving at least one sequence of images of the environment captured with the omnidirectional vehicle camera during driving of the vehicle, providing a stream of data of the at least one sequence of images to the calculating unit during driving of the vehicle, and updating the data representation in accordance with the stream of data of the at least one sequence of images provided to the calculating unit. Accordingly, the omnidirectional vehicle camera is configured to capture at least one sequence of images of the environment during driving of the vehicle, and to provide data of the at least one sequence of images to the calculating unit in a stream of data successively with capturing the at least one sequence of images (frames), and the processing unit is configured to update the data representation in accordance with the stream of data of the at least one sequence of images (frames). This provides the advantage that with the number of images, the attributing of a probability to the determined at least one candidate parking space becomes more reliable since a higher amount of image data from different perspectives is available for the same physical space.

According to an embodiment, the data representation is provided through the graphical user interface in a plan view with the determined at least one candidate parking space marked as a respective geometric space in the environment. This provides a good overview for the driver over available parking spots, and how to reach them. However, any other suitable data representations, such as by use of graphical and/or text elements, and/or by use of audible announcements, may also be used.

According to a further embodiment, the at least one property comprises a distance between respective two vehicle roofs located in the environment.

According to an embodiment, the parameter set is indicative of whether at least one threshold associated with the at least one property (e.g. for a distance between two vehicle roofs) of the candidate parking space is exceeded, or not.

In comparison to known on board vehicle multi-camera systems for employing surround view, the vehicle parking assist system according to the present invention can be provided at relative low cost since only one camera is required and the processing effort in comparison to multi-camera processing systems can be decreased. Further, in known on board vehicle multi-camera systems, the optical camera based detection is typically limited to immediate surrounding (such as maximum range of 3 meters) because the vehicle cameras are mounted at low height (e.g. under 1 meter for rear view and side view).

Any aspects and embodiments described herein with respect to the method can equally be employed in the parking assist system with the calculating unit, processing unit and/or vehicle camera configured (by software and/or hardware) appropriately.

Aspects of the invention and embodiments will now be described with reference to the following Figures in which
- Fig. 1: depicts a schematic block diagram of a vehicle parking assist system according to an embodiment of the invention,
- Fig. 2: shows an exemplary scenery of an environment with parked cars and a vehicle according to an embodiment of the invention,
- Fig. 3: shows an exemplary data representation of an environment, which may be shown on a display of a graphical user interface, in the form of a parking lot map.

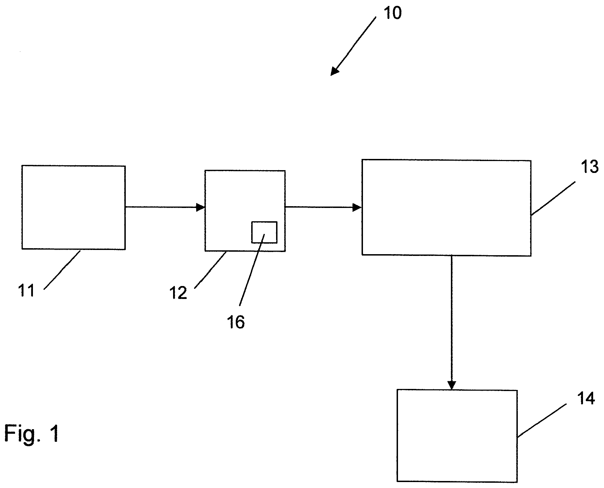

Aspects and embodiments of the invention will now be described with reference to Figures 1 to 3 which show exemplary embodiments thereof.

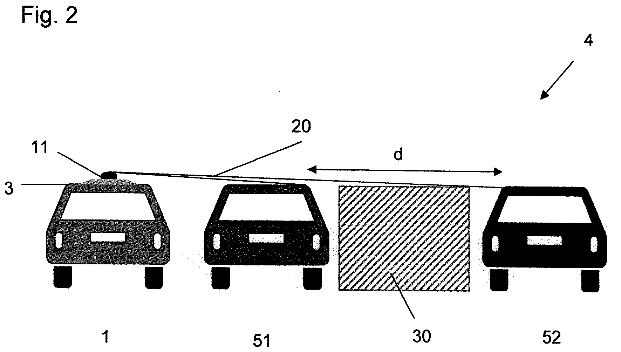

Fig. 1 depicts a schematic block diagram of a vehicle parking assist system 10 according to an embodiment of the invention. The vehicle parking assist system 10 comprises an omnidirectional vehicle camera 11 with an approximately 360-degree field of view at least in the horizontal plane. The omnidirectional vehicle camera 11 is configured and arranged to capture one or more images 20 of an environment 4 proximate to the vehicle 1, schematically shown in Fig. 2. As further shown in Fig. 2, the omnidirectional vehicle camera 11 is mounted at a roof 3 of the vehicle 1, for example on the top of the roof 3. For instance, the camera 11 may be mounted on the roof 3 within an appropriate housing placed on top of the vehicle, or integrated into the vehicle roof in an appropriate way, e.g. like known vehicle antennas. By mounting the vehicle camera 11 at the roof 3 of the vehicle 1, the vehicle camera 11 has a field of view which is typically above the height of other vehicles of the same type, so that the vehicle camera 11 may take images 20 which capture a range of the environment 4 which covers a dimension of a plurality of vehicles 51, 52 located in the environment 4. For example, it covers a range of between 2 and 5 vehicles adjacent to the vehicle 1, i.e. vehicles which are at a distance of up to 5 vehicles widths or lengths from the vehicle 1.

The omnidirectional vehicle camera 11 has an approximately 360-degree field of view at least in the horizontal plane. In particular, the omnidirectional vehicle camera 11 has a 360-degree field of view, wherein "approximately 360 degree" shall mean that the beginning and end of an image frame (the side edges of an image) may not exactly coincide according to a full/exact 360 degrees, but may deviate a few degrees depending on the particular camera settings and circumstances. In the following, the term "360 degree image" shall be understood in this way as an image having a 360-degree field of view at least in the horizontal plane which may have such deviations.

An ideal omnidirectional camera captures light from all directions falling onto the focal point, covering a full sphere. In practice, however, most omnidirectional cameras cover only almost the full sphere and many cameras which are referred to as omnidirectional cover only approximately a hemisphere, or 360 degrees along the equator of the sphere (horizontal plane) but excluding the top and bottom of the sphere. The omnidirectional camera according to the present invention shall encompass all these types of omnidirectional cameras.

A calculating unit 12 is operatively coupled with the omnidirectional vehicle camera 11 for receiving data of the one or more images 20. For example, the connection may be wired or wireless, e.g. over a CAN-bus of the vehicle. The calculating unit 12 may be implemented in software or hardware, in discrete or distributed manner, in any appropriate processing device (such as the ECU) or in the vehicle camera 11.

The calculating unit 12 determines at least one parameter set indicative of at least one property, such as a region, of a candidate parking space 30 for the vehicle 1 from the data of the one or more images 20 within a range of the environment 4 which covers a dimension of a plurality of vehicles 51, 52, e.g. a dimension of several vehicle lengths or widths, such as of up to 5 vehicles. The calculating unit 12 may be a processor or a part thereof and may have a programmable storing unit 16 for storing a programmed set of parameters, or may be an integrated circuit with a programmable logic, such as a FPGA circuit. The programming of the set of parameters or of the FPGA may be done according to a set of parameters provided in a machine learning process from a neural network according to the principles of such inference using neural network layers, as known to the skilled person and as set out in more detail below.

A processing unit 13 is operatively coupled with the calculating unit 12 and receives signals from the calculating unit 12, such as the determined parameter set processed by the calculating unit 12. For example, the connection may be wired or wireless, e.g. over a CAN-bus of the vehicle. The processing unit 13 may be implemented in software or hardware, in discrete or distributed manner, in any appropriate processing device of the vehicle or in the vehicle camera 11. The processing unit 13 determines at least one candidate parking space 30 from the parameter set. The processing unit 13 may be comprised in an ECU of the vehicle 1 for controlling driving functions thereof. In one implementation, the calculating unit and the processing unit may be part of the same processing device (e.g. one of the processors of the ECU) and/or may be implemented in software.

For example, in the embodiment according to Fig. 2, the calculating unit 12 determines at least one parameter set indicative of a distance d between respective two vehicle roofs 3 of vehicles 51 and 52 located in the environment 4. In particular, the calculating unit 12 may determine at least two edges in the one or more images 20 corresponding to the edges of the vehicle roofs 3 and may determine a parameter set which indicates whether there is a discrepancy to a predetermined threshold, or not. For example, if there is a probability of at least 75% of having found a distance d greater than the predetermined threshold, then the parameter set may be determined accordingly and the processing unit 13 may determine that a parking space 30 has been found (as shown in Fig. 2). On the other hand, if there is a probability of lower than 25% of having found a distance d greater than the predetermined threshold, then the parameter set may be determined accordingly and the processing unit 13 may determine that no parking space has been found.

As set out above, the calculating unit 12 may be an integrated circuit with a programmable logic, such as a FPGA circuit. The programming of the FPGA may be done according to a set of parameters provided from a neural network according to the principles of inference using neural network layers, as known to the skilled person. For example, a set of several 1000 test images may be provided to a neural network as input, wherein in each image coordinates of available parking space (e.g., with distances d greater than a predetermined threshold) are manually associated with the image by the operating person for processing by the neural network. For image recognition, appropriate feature and pattern recognition algorithms as used in image recognition techniques may be employed, which are known to the skilled person, such as SIFT, SURF or Canny edge detector, to name a few. The neural network continuously maps the surrounding in form of a parameter set therefrom which is recalculated and updated with each new image provided to the neural network and its associated parking space coordinates. In this way, such neural network forms a machine learning system, the results of which are determined in a corresponding set of parameters, which may be used for programming the FPGA. For and during the training process, the skilled person has appropriate tools, such as influencing of layers of the network during the learning process, and testing whether the result is in the range of expected results. Suitable neural networks are available from, e.g., Matlab ®, TensorFlow ®, TensorRT ® Cafee (http://caffe.berkeleyvision.org/).

For example, the roof camera provides a video (or image) stream (30 .. 60 fps) or 360° horizontal view to an optical filter taking care of classical video preprocessing like: white balance, smooth luminance adjustment, gamma correction, CMOS wide dynamic range correlation, scaling and/or de-warping (fish-eye lens aspect correction). The video stream output of the optical filter is fed into a Deep NN forward computing core which uses the trained Deep Neural Network layer parameters to provide the parking region candidates to the space mapper. The space mapper uses the correlated time stamp signal (e.g. V-sync) propagated through the Deep NN in order to match the sampling of the locating sensors (e.g., gyroscope, speed pulse meter, accelerometer) to parking regions determined by the Deep NN and creates a 2D map (e.g., origin being the middle of the vehicle top = camera) subdivided into regions and containing information about the probability of the available parking space. This information is used by the presentation (GUI) to present it in real-time to the driver.

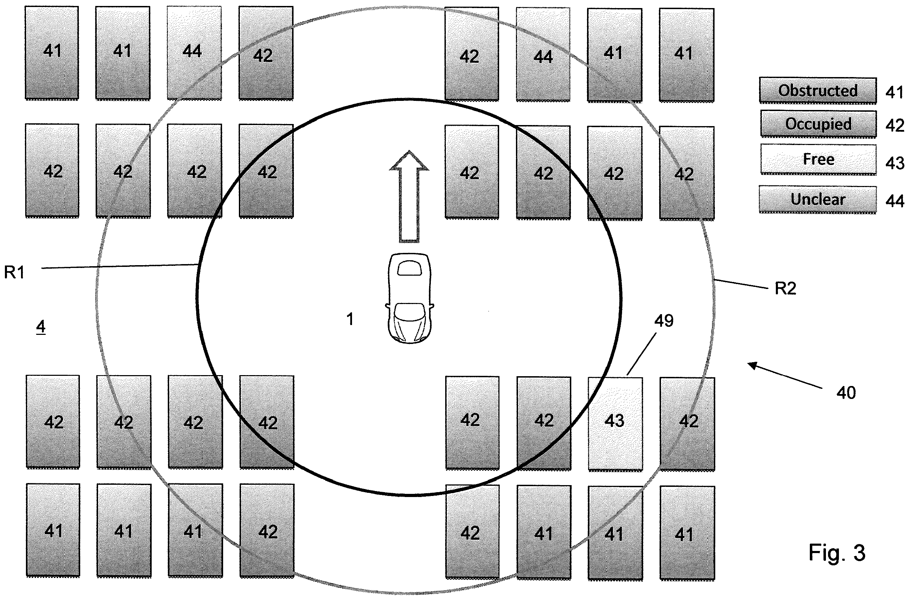

After having determined at least one candidate parking space 30, the processing unit 13 provides a data representation of at least part of the environment to a graphical user interface 14 for driver's assistance. In particular, as shown in an exemplary embodiment in Fig. 3, it provides a data representation 40 of at least part of the environment 4 with a representation for the determined candidate parking spaces. According to an embodiment, the data representation is provided on a display of the graphical user interface 14 (such as a head unit of the vehicle) as a data map 40, such as a plan parking lot map view as shown in Fig. 3.

In the data map 40, the determined candidate parking spaces 30 are represented with a respective geometric space 49 (e.g. a rectangle) in the environment. Likewise, the places in the environment which are not available as actual parking space are represented with a respective different geometric space, for example, in different shape, color or text. As such, a shape, color and/or text of the determined candidate parking space 30 may be an attributed probability for applicability as a parking space in the data map 40.

For example, the probability for applicability as a parking space may be adapted and modified based on a time period elapsed from a determined point of time, such as the time of determination of the candidate parking space.

As shown in the example of Fig. 3, the probability, e.g. indicated by color or text of the respective rectangle, is determined from a graded probability set. For example, the probability set includes a respective probability which is indicative of an obstructed parking space (unknown or low probability as a parking space; shown in Fig. 3 at 41), an occupied parking space (lowest probability; shown in Fig. 3 at 42), a free parking space (high probability; shown in Fig. 3 at 43), and an unclear applicability (unclear probability; shown in Fig. 3 at 44). Each of these may be marked with different shape, color and/or text.

The one or more candidate parking spaces 30 may be determined within a certain radius R1 or R2 around the vehicle 1. Likewise and independently therefrom, the data map 40 may be provided and extended out to regions of the environment 4 within the radius R1 or R2. In this way, a surrounding data map of available parking space around a vehicle may be provided, so that the driver has a clear overview of available parking space surrounding his or her vehicle. The radius R1 and/or R2 may be adjustable by the user, or may be determined automatically (e.g. depending on vehicle speed).

It is preferable that a sequence of images 20 of the environment 4 is captured with the omnidirectional vehicle camera 11 during driving of the vehicle 1 (indicated by the arrow in Fig. 3). In this way, a stream of data of the sequence of images 20 is provided to the calculating unit 12 during driving of the vehicle 1 successively with capturing the images 20, so that the data map 40 can be updated in accordance with the stream of data of the sequence of images 20. In this way, the data map 40 gets more accurate and can be extended out to greater parts of the environment 4. With using speed metering the detected candidate parking lots can change their probability for being occupied/free, or not, due to the stream of data of the plurality of images and different viewing perspectives as the vehicle moves, so that the driver can get guidance of the most probable parking spaces as the vehicle moves and the parking assist system maps the area.

According to an embodiment, as soon as the vehicle speed drops under a predetermined threshold, e.g., under 30 km/h, the system can display (depending on human machine interface settings) the surrounding area (like as shown in Fig. 3) by marking the candidate parking spaces for available parking lots. There may be no interaction required for the driver.

In cases with obstructed view there is no quite guarantee that a candidate parking space is available, however the system can detect and display the probability for a free parking lot, as described above. This process is intuitive as it would be the natural way of looking for a parking space, with the additional advantage that the omnidirectional vehicle camera can perform such process more efficiently as compared to the driver due to the longer line of sight and the 360 degree surround view.

## Claims

1. A parking assist method for a vehicle comprising:
- receiving at least one image (20) of an environment (4) captured with an omnidirectional vehicle camera (11) mounted at a roof (3) of the vehicle (1) and with an approximately 360-degree field of view at least in the horizontal plane,
- providing data of the at least one image (20) to a calculating unit (12) which is configured to determine from the received data at least one parameter set indicative of at least one property (d), which comprises a distance (d) between respective two vehicle roofs (3) located in the environment (4), of a candidate parking space (30) for the vehicle (1) within a range of the environment (4) which covers a dimension of a plurality of vehicles (51, 52) located in the environment (4),
- determining at least one candidate parking space (30) from the parameter set, and
- providing a data representation (40) of at least part of the environment (4) with a representation (49) of the determined at least one candidate parking space (30) through a graphical user interface (14).

2. The method according to claim 1, further comprising attributing the determined at least one candidate parking space (30) a probability for applicability as a parking space in the data representation (40).

3. The method according to claim 2, further comprising adapting the probability for applicability as a parking space based on a time period elapsed from a determined point of time.

4. The method according to claim 2 or 3, wherein the probability is determined from a graded probability set (41-44) which is indicative of at least two of: an obstructed parking space, an occupied parking space, a free parking space, and an unclear applicability.

5. The method according to one of claims 1 to 4, comprising determining at least one candidate parking space (30) within a predetermined first radius (R1, R2) around the vehicle (1) and/or providing the data representation (40) of at least part of the environment (4) within a predetermined second radius (R1, R2) around the vehicle (1).

6. The method according to one of claims 1 to 5, comprising receiving at least one sequence of images (20) of the environment (4) captured with the omnidirectional vehicle camera (11) during driving of the vehicle (1), providing a stream of data of the at least one sequence of images (20) to the calculating unit (12) during driving of the vehicle (1), and updating the data representation (40) in accordance with the stream of data of the at least one sequence of images (20) provided to the calculating unit (12).

7. The method according to one of claims 1 to 6, wherein the data representation (40) is provided through the graphical user interface (14) in a plan view with the determined at least one candidate parking space (30) marked as a respective geometric space (49) in the environment.

8. The method according to one of claims 1 to 7, wherein the parameter set is indicative of whether at least one threshold associated with the at least one property (d) of the candidate parking space (30) is exceeded, or not.

9. A computer program product comprising software code sections which are configured to perform a method according to one of claims 1 to 8.

10. Vehicle parking assist system (10) comprising
- an omnidirectional vehicle camera (11) with an approximately 360-degree field of view at least in the horizontal plane mounted at a roof (3) of the vehicle (1), wherein the omnidirectional vehicle camera (11) is configured and arranged to capture at least one image (20) of an environment (4) proximate to the vehicle (1),
- a calculating unit (12) operatively coupled with the omnidirectional vehicle camera (11) for receiving data of the at least one image (20), and configured to determine at least one parameter set indicative of at least one property (d), which comprises a distance (d) between respective two vehicle roofs (3) located in the environment (4), of a candidate parking space (30) for the vehicle (1) from the data of the at least one image (20) within a range of the environment (4) which covers a dimension of a plurality of vehicles (51, 52) located in the environment (4),
- a processing unit (13) operatively coupled with the calculating unit (12) and configured to determine at least one candidate parking space (30) from the parameter set, and
- the processing unit (13) is configured to provide a data representation (40) of at least part of the environment (4) with a representation (49) of the determined at least one candidate parking space (30) to a graphical user interface (14) for a driver's assistance.

11. Vehicle parking assist system according to claim 10, wherein
- the omnidirectional vehicle camera (11) is configured to capture at least one sequence of images (20) of the environment (4) during driving of the vehicle (1), and to provide data of the at least one sequence of images (20) to the calculating unit (12) in a stream of data successively with capturing the at least one sequence of images (20), and
- the processing unit (13) is configured to update the data representation (40) in accordance with the stream of data of the at least one sequence of images (20) provided to the calculating unit (12).

12. Vehicle parking assist system according to claim 10 or 11, wherein the calculating unit (12) includes an integrated circuit, in particular a Field Programmable Gate Array or a Neural Processing Unit, which is programmed according to a set of parameters provided from a multi layer neural network.

13. Vehicle parking assist system according to claim 10 or 11, wherein the calculating unit (12) includes a processing device coupled with a storing device (16) which is programmed according to a set of parameters provided from a multi layer neural network.

14. Vehicle parking assist system according to one of claims 10 to 13, wherein the processing unit (13) is comprised in an electronic control unit, ECU, of the vehicle (1) for controlling driving functions thereof.

## Patentansprüche

1. Parkassistenzverfahren für ein Fahrzeug, das folgende Schritte aufweist:
- Empfangen von mindestens einem Bild (20) einer Umgebung (4), das mit einer omnidirektionalen Fahrzeugkamera (11) aufgenommen wird, die an einem Dach (3) des Fahrzeugs (1) angebracht ist und ein Sichtfeld von ungefähr 360 Grad zumindest in der horizontalen Ebene aufweist,
- Liefern von Daten des mindestens einen Bildes (20) an eine Berechnungseinheit (12), die dazu ausgebildet ist, aus den empfangenen Daten mindestens einen Parametersatz zu bestimmen, der mindestens eine Eigenschaft (d) - welche eine Distanz (d) zwischen zwei jeweiligen, in der Umgebung (4) vorhandenen Fahrzeugdächern (3) beinhaltet - eines in Frage kommenden Parkplatzes (30) für das Fahrzeug (1) innerhalb eines Bereichs der Umgebung (4) angibt, der eine Abmessung einer Mehrzahl von in der Umgebung (4) vorhandenen Fahrzeugen (51, 52) beinhaltet,
- Bestimmen von mindestens einem in Frage kommenden Parkplatz (30) aus dem Parametersatz, und
- Bereitstellen einer Datendarstellung (40) von mindestens einem Teil der Umgebung (4) mit einer Darstellung (49) des bestimmten mindestens einen in Frage kommenden Parkplatzes (30) über eine grafische Benutzeroberfläche (14).

2. Verfahren nach Anspruch 1,
das ferner beinhaltet, dass dem bestimmten, mindestens einen in Frage kommenden Parkplatz (30) eine Wahrscheinlichkeit für die Verwendbarkeit als Parkplatz in der Datendarstellung (40) zugeordnet wird.

3. Verfahren nach Anspruch 2,
das ferner das Anpassen der Wahrscheinlichkeit für die Verwendbarkeit als Parkplatz auf der Basis eines Zeitraums beinhaltet, der seit einem bestimmten Zeitpunkt verstrichen ist.

4. Verfahren nach Anspruch 2 oder 3,
wobei die Wahrscheinlichkeit aus einem abgestuften Wahrscheinlichkeitssatz (41-44) bestimmt wird, der mindestens zwei der folgenden Parameter angibt: einen blockierten Parkplatz, einen belegten Parkplatz, einen freien Parkplatz und eine unklare Verwendbarkeit.

5. Verfahren nach einem der Ansprüche 1 bis 4,
das das Bestimmen von mindestens einem in Frage kommenden Parkplatz (30) innerhalb eines vorbestimmten ersten Radius (R1, R2) um das Fahrzeug (1) und/oder das Bereitstellen der Datendarstellung (40) von mindestens einem Teil der Umgebung (4) innerhalb eines vorbestimmten zweiten Radius (R1, R2) um das Fahrzeug (1) herum beinhaltet.

6. Verfahren nach einem derAnsprüche 1 bis 5,
das ferner beinhaltet: Empfangen von mindestens einer Sequenz von Bildern (20) der Umgebung (4), die während der Fahrt des Fahrzeugs (1) mit der omnidirektionalen Fahrzeugkamera (11) aufgenommen wird, Liefern eines Datenstroms der mindestens einen Sequenz von Bildern (20) an die Berechnungseinheit (12) während der Fahrt des Fahrzeugs (1), und Aktualisieren der Datendarstellung (40) in Abhängigkeit von dem Datenstrom der mindestens einen Sequenz von Bildern (20), die an die Berechnungseinheit (12) geliefert wird.

7. Verfahren nach einem der Ansprüche 1 bis 6,
wobei die Datendarstellung (40) durch die grafische Benutzeroberfläche (14) in einer Draufsicht bereitgestellt wird, wobei der bestimmte mindestens eine in Frage kommende Parkplatz (30) als ein jeweiliger geometrischer Raum (49) in der Umgebung markiert wird.

8. Verfahren nach einem der Ansprüche 1 bis 7,
wobei der Parametersatz angibt, ob mindestens eine Schwelle, die der mindestens einen Eigenschaft (d) des in Frage kommenden Parkplatzes (30) zugeordnet ist, überschritten wird oder nicht.

9. Computerprogrammprodukt, das Softwarecodeabschnitte umfasst, die zur Durchführung eines Verfahrens nach einem der Ansprüche 1 bis 8 ausgebildet sind.

10. Parkassistenzsystem (10) für ein Fahrzeug, aufweisend:
- eine omnidirektionale Fahrzeugkamera (11) mit einem Sichtfeld von ungefähr 360 Grad zumindest in der horizontalen Ebene, die an einem Dach (3) des Fahrzeugs (1) angebracht ist, wobei die omnidirektionale Fahrzeugkamera (11) dazu ausgebildet und angeordnet ist, um mindestens ein Bild (20) von einer Umgebung (4) in der Nähe des Fahrzeugs (1) aufzunehmen,
- eine Berechnungseinheit (12), die mit der omnidirektionalen Fahrzeugkamera (11) zum Empfangen von Daten des mindestens einen Bildes (20) betriebsmäßig gekoppelt ist sowie dazu ausgebildet ist, mindestens einen Parametersatz, der mindestens eine Eigenschaft (d) - welche eine Distanz (d) zwischen zwei jeweiligen, in der Umgebung (4) vorhandenen Fahrzeugdächern (3) beinhaltet - eines in Frage kommenden Parkplatzes (30) für das Fahrzeug (1) angibt, zu bestimmen aus den Daten des mindestens einen Bildes (20) innerhalb eines Bereichs der Umgebung (4), der eine Abmessung einer Mehrzahl von in der Umgebung (4) vorhandenen Fahrzeugen (51, 52) beinhaltet,
- eine Verarbeitungseinheit (13), die mit der Berechnungseinheit (12) betriebsmäßig gekoppelt ist und dazu ausgebildet ist, mindestens einen in Frage kommenden Parkplatz (30) aus dem Parametersatz zu bestimmen, und
- wobei die Verarbeitungseinheit (13) dazu ausgebildet ist, eine Datendarstellung (40) mindestens eines Teils der Umgebung (4) mit einer Darstellung (49) des ermittelten mindestens einen in Frage kommenden Parkplatzes (30) an einer grafischen Benutzeroberfläche (14) für eine Fahrerassistenz bereitzustellen.

11. Parkassistenzsystem für ein Fahrzeug nach Anspruch 10, wobei
- die omnidirektionale Fahrzeugkamera (11) dazu ausgebildet ist, mindestens eine Sequenz von Bildern (20) der Umgebung (4) während der Fahrt des Fahrzeugs (1) aufzunehmen und Daten der mindestens einen Sequenz von Bildern (20) an die Berechnungseinheit (12) in einem Datenstrom sukzessive mit dem Aufnehmen der mindestens einen Sequenz von Bildern (20) zu liefern, und
- die Verarbeitungseinheit (13) dazu ausgebildet ist, die Datendarstellung (40) in Abhängigkeit von dem Datenstrom der mindestens einen Sequenz von Bildern (20) zu aktualisieren, die an die Berechnungseinheit (12) geliefert wird.

12. Parkassistenzsystem für ein Fahrzeug nach Anspruch 10 oder 11,
wobei die Berechnungseinheit (12) eine integrierte Schaltung, insbesondere eine Field Programmable Gate Array oder eine neuronale Verarbeitungseinheit, aufweist, die in Abhängigkeit von einem Satz von Parametern programmiert ist, die von einem mehrschichtigen neuronalen Netzwerk bereitgestellt werden.

13. Parkassistenzsystem für ein Fahrzeug nach Anspruch 10 oder 11,
wobei die Berechnungseinheit (12) eine Verarbeitungsvorrichtung aufweist, die mit einer Speichervorrichtung (16) gekoppelt ist, die gemäß einem Satz von Parametern programmiert ist, die von einem mehrschichtigen neuronalen Netzwerk bereitgestellt werden.

14. Parkassistenzsystem für ein Fahrzeug nach einem der Ansprüche 10 bis 13,
wobei die Verarbeitungseinheit (13) in einer elektronischen Steuereinheit, ECU, des Fahrzeugs (1) zum Steuern von Fahrfunktionen desselben enthalten ist.

## Revendications

1. Procédé d'aide au stationnement pour un véhicule comprenant :
- le fait de recevoir au moins une image (20) d'un environnement (4) capturée avec une caméra omnidirectionnelle de véhicule (11) montée sur un toit (3) du véhicule (1) et avec un champ de vision d'approximativement 360 degrés au moins dans le plan horizontal ;
- le fait de fournir des données de ladite au moins une image (20) à une unité de calcul (12) qui est configurée pour déterminer à partir des données reçues au moins un jeu de paramètres révélateur d'au moins une propriété (d), qui comprend une distance (d) entre deux toits de véhicules respectifs (3) situés dans l'environnement (4), d'un emplacement de stationnement candidat (30) pour le véhicule (1) au sein d'une étendue de l'environnement (4) qui couvre une dimension d'une multiplicité de véhicules (51, 52) situés dans l'environnement (4) ;
- le fait de déterminer au moins un emplacement de stationnement candidat (30) à partir du jeu de paramètres ; et
- le fait de munir une représentation de données (40) d'au moins une partie de l'environnement (4) d'une représentation (49) dudit au moins un emplacement de stationnement candidat déterminé (30) via une interface utilisateur (14) de type graphique.

2. Procédé selon la revendication 1, comprenant en outre le fait d'attribuer audit au moins un emplacement de stationnement candidat déterminé (30) une probabilité d'application sous la forme d'un emplacement de stationnement dans la représentation de données (40).

3. Procédé selon la revendication 2, comprenant en outre le fait d'adapter la probabilité d'application sous la forme d'un emplacement de stationnement en se basant sur un laps de temps écoulé à partir d'un instant déterminé.

4. Procédé selon la revendication 2 ou 3, dans lequel la probabilité est déterminée à partir d'un jeu gradué de probabilités (41-44) qui est révélateur d'au moins deux probabilités choisies parmi : un emplacement de stationnement inaccessible, un emplacement de stationnement occupé, un emplacement de stationnement libre et une applicabilité ambiguë.

5. Procédé selon l'une quelconque des revendications 1 à 4, comprenant le fait de déterminer au moins un emplacement de stationnement candidat (30) au sein d'un premier rayon prédéterminé (R1, R2) autour du véhicule (1) et/ou le fait de munir la représentation de données (40) d'au moins une partie de l'environnement (4) au sein d'un second rayon prédéterminé (R1, R2) autour du véhicule (1).

6. Procédé selon l'une quelconque des revendications 1 à 5, comprenant le fait de recevoir au moins une séquence d'images (20) de l'environnement (4) capturées avec la caméra omnidirectionnelle de véhicule (11) lorsque le véhicule (1) roule ; le fait de fournir un flux de données de ladite au moins une séquence d'images (20) à l'unité de calcul (12) lorsque le véhicule (1) roule ; et le fait de mettre à jour la représentation de données (40) en conformité avec le flux de données de ladite au moins une séquence d'images (20) fournie à l'unité de calcul (12).

7. Procédé selon l'une quelconque des revendications 1 à 6, dans lequel la représentation de données (40) est fournie via l'interface utilisateur (14) de type graphique dans une vue en plan dans laquelle ledit au moins un emplacement de stationnement candidat déterminé (30) est marqué sous la forme d'un espace géométrique respectif (49) dans l'environnement.

8. Procédé selon l'une quelconque des revendications 1 à 7, dans lequel le jeu de paramètres est révélateur du fait de savoir si oui ou non au moins un seuil associé à ladite au moins une propriété (d) de l'emplacement de stationnement candidat (30) est dépassé.

9. Produit de programme informatique comprenant des segments de codes de logiciels qui sont configurés pour la mise en oeuvre d'un procédé selon l'une quelconque des revendications 1 à 8.

10. Système (10) d'aide au stationnement d'un véhicule comprenant :
- une caméra omnidirectionnelle de véhicule (11) possédant un champ de vision d'approximativement 360 degrés au moins dans le plan horizontal, montée sur un toit (3) du véhicule (1), dans lequel la caméra omnidirectionnelle de véhicule (11) est configurée et conçue pour capturer au moins une image (20) d'un environnement (4) à proximité du véhicule (1) ;
- une unité de calcul (12) couplée de manière opérationnelle à la caméra omnidirectionnelle de véhicule (11) pour la réception de données de ladite au moins une image (20) ; et configurée pour déterminer au moins un jeu de paramètres révélateur d'au moins une propriété (d), qui comprend une distance (d) entre deux toits de véhicules respectifs (3) situés dans l'environnement (4), d'un emplacement de stationnement candidat (30) pour le véhicule (1), à partir des données de ladite au moins une image (20), au sein d'une étendue de l'environnement (4) qui couvre une dimension d'une multiplicité de véhicules (51, 52) situés dans l'environnement (4) ;
- une unité de traitement (13) couplée de manière opérationnelle à l'unité de calcul (12) et configurée pour déterminer au moins un emplacement de stationnement candidat (30) à partir du jeu de paramètres ; et
- l'unité de traitement (13) est configurée pour fournir une représentation de données (40) d'au moins une partie de l'environnement (4) comprenant une représentation (49) dudit au moins un emplacement de stationnement candidat déterminé (30) à une interface utilisateur (14) de type graphique afin d'apporter une aide à un conducteur.

11. Système d'aide au stationnement d'un véhicule selon la revendication 10, dans lequel :
- la caméra omnidirectionnelle de véhicule (11) est configurée pour capturer au moins une séquence d'images (20) de l'environnement (4) lorsque le véhicule (1) roule ; et pour fournir des données de ladite au moins une séquence d'images (20) à l'unité de calcul (12) dans un flux de données de manière successive à la capture de ladite au moins une séquence d'images (20) ; et
- l'unité de traitement (13) est configurée pour mettre à jour la représentation de données (40) en conformité avec le flux de données de ladite au moins une séquence d'images (20) fournie à l'unité de calcul (12).

12. Système d'aide au stationnement d'un véhicule selon la revendication 10 ou 11, dans lequel l'unité de calcul (12) englobe un circuit intégré, en particulier une matrice prédiffusée programmable par l'utilisateur ou une unité de traitement neuronal, qui est programmé en conformité avec un jeu de paramètres fourni à partir d'un réseau neuronal multicouche.

13. Système d'aide au stationnement d'un véhicule selon la revendication 10 ou 11, dans lequel l'unité de calcul (12) englobe un dispositif de traitement couplé à un dispositif de stockage (16) qui est programmé en conformité avec un jeu de paramètres fourni à partir d'un réseau neuronal multicouche.

14. Système d'aide au stationnement d'un véhicule selon l'une quelconque des revendications 10 à 13, dans lequel l'unité de traitement (13) est comprise dans une unité de commande électronique, ECU, du véhicule (1) pour la commande des fonctions de conduite de ce dernier.
